Europäisches Patentamt

European Patent Office

Office européen des brevets

(11) Veröffentlichungsnummer: **0 123 191**
**A2**

# (12) EUROPÄISCHE PATENTANMELDUNG

(21) Anmeldenummer: **84103900.1**

(22) Anmeldetag: **07.04.84**

(51) Int. Cl.³: **C 03 B 37/025**
**C 03 B 19/04**

(30) Priorität: **20.04.83 DE 3314302**

(43) Veröffentlichungstag der Anmeldung:
**31.10.84 Patentblatt 84/44**

(84) Benannte Vertragsstaaten:
**DE FR GB IT**

(71) Anmelder: **International Standard Electric Corporation**
**320 Park Avenue**
**New York New York 10022(US)**

(84) Benannte Vertragsstaaten:
**FR GB IT**

(71) Anmelder: **Standard Elektrik Lorenz Aktiengesellschaft**
**Kurze Strasse 8**
**D-7000 Stuttgart 30 (Feuerbach)(DE)**

(84) Benannte Vertragsstaaten:
**DE**

(72) Erfinder: **Baumgärtner, Armin, Dr.**
**Heutingsheimer Strasse 26**
**D-7140 Ludwigsburg(DE)**

(72) Erfinder: **Dorn, Reimund, Dr.**
**Peter-von-Koblenz-Strasse 31**
**D-7141 Schwieberdingen(DE)**

(72) Erfinder: **Hanisch, Helmut**
**Am Langen Hag 15**
**D-7440 Nürtingen(DE)**

(72) Erfinder: **Gutu-Nelle, Anka**
**Münchinger Strasse 111**
**D-7000 Stuttgart 40(DE)**

(72) Erfinder: **Springer, Johann, Dr.**
**Schanbacher Strasse 9**
**D-7307 Aichwald(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) Verfahren zum Herstellen von Glaskörpern, insbesondere für die Herstellung von Lichtwellenleitern.

(57) Die Erfindung bezieht sich auf einen Verfahrensschritt zur Herstellung von Glaskörpern, insbesondere von Vorformen für Lichtwellenleiter, bei dem aus pulverförmigem Glas-Ausgangsmaterial ein poröser Körper geformt wird. Das pulverförmige Glasausgangsmaterial wird mit einem flüssigen oder festen Zusatzstoff vermischt und in eine längliche Form eingefüllt, die während oder nach dem Einfüllen in Rotation um ihre Längsachse versetzt wird. Unter der Wirkung der Zentrifugalkraft läßt sich eine radial variierende Material-zusammensetzung des zu formenden porösen Körpers erreichen. Nachdem dies geschehen ist, wird das eingefüllte Material durch Pressen oder ohne Pressen verfestigt und der Zusatzstoff durch Wärmebehandlung und/oder eine chemische Reaktion aus dem verfestigten porösen Körper entfernt, bevor diese durch Sintern in einen Glaskörper übergeführt wird.

EP 0 123 191 A2

A.Baumgärtner-10-8-4-2-4

Verfahren zur Herstellung von Glasköpern, insbesondere
von Vorformen für Lichtwellenleiter

Die Erfindung betrifft ein Verfahren zur Herstellung von
Glaskörpern nach dem Oberbegriff des Patentanspruchs 1.

Ein derartiges Verfahren ist bekannt aus GB-A-1 113 101
und wird dort angewendet zur Herstellung von Luminanzenzgläsern, die unter anderem auch die Form von Fasern haben.
Als Zusatzstoff wird Wasser oder eine andere Flüssigkeit
verwendet. Das Formen des porösen Körpers geschieht beim
bekannten Verfahren ausschließlich durch Pressen.

Es ist die Aufgabe der Erfindung, ein Verfahren der genannten Art anzugeben, bei dem die Formung durch andere
Maßnahmen als ausschließlich durch Pressen bewirkt wird.
Das Verfahren soll insbesondere für die Herstellung von
Vorformen für Lichtwellenleiter geeignet sein. Die Aufgabe
wird wie im Patentanspruch 1 angegeben gelöst. Weiterbildungen ergeben sich aus den Unteransprüchen.

Das erfindungsgemäße Verfahren hat den Vorteil, daß bereits während der Formung die Zusammensetzung in radialer
Richtung beeinflußt werden kann,
was    hinsichtlich der Herstellung von Vorformen für

A.Baumgärtner-10-8-4-2-4

Lichtwellenleiter je nach dem gewünschten Lichtwellenleitertyp notwendig sein kann.

Die Erfindung wird nun beispielsweise näher erläutert.

Im Falle, daß der zugesetzte Stoff eine Flüssigkeit ist,
wird die Mischung als eine zähflüssige Masse in eine längliche Form eingefüllt, wogegen es im Falle eines Feststoffes als Zusatzstoff pulverförmig eingefüllt wird.

Läßt man die Form, in welche die zähflüssige Ausgangsmasse
gefüllt wird, mit ausreichender Geschwindigkeit um ihre
Längsachse rotieren, so ist die auf die Partikel wirkende
Zentrifugalkraft in der Lage, die Verteilung der Partikel
in radialer Richtung zu verändern. Benützt man anstelle
des reinen $SiO_2$-Pulvers eine Mischung von $SiO_2$ mit einem
Dotiermittel, z. B. $GeO_2$, so kann das Mischungsverhältnis
durch die genannte Roatation in Abhängigkeit vom Abstand
zur Rotationsachse in weiten Grenzen eingestellt werden.
Insbesondere kann auch die spezifisch schwerere Komponente
in der Mitte angereichert werden, wenn die Partikelgröße
deutlich kleiner ist als die der leichteren Komponente,
da die Zentrifugalkraft nur von der Masse der Partikel,
nicht aber von ihrer Dichte abhängt. Für Teilchen in einer rotierenden Flüssigkeit gilt die Gleichung:

$$-k \cdot T \cdot \frac{dn}{dr} \quad - n \cdot m \, (R-r) = 0$$

Dabei ist:
k die Boltzmann-Konstante,
T die ablsolute Temperatur,

n die Teilchendichte,

m die Teilchenmasse,

R der Radius der rohrförmigen rotierenden Form und

r der radiale Teilchenabstand von der Rotationsachse.

Durch Integration dieser Gleichung ergibt sich eine stationäre Verteilung der Teilchendichte n (r):

$$n(r) = n(0) \cdot EXP \left(-\frac{m\omega^2}{kT} Rr\right) \cdot EXP \left(\frac{m\omega^2}{2kT} r^2\right),$$

wobei $\omega$ die Winkelgeschwindigkeit der Rotation ist. Für ein Gemisch aus Siliziumdioxid (Partikelgröße 0,4 $\mu$m) und Germaniumdioxid (Partikelgröße 0,01 $\mu$m) ergibt sich bei einer Umdrehungszahl von 5 Hz in einem 4 cm dicken Zylinder in einer Matrix der Dichte 1 g/ccm ein $GeO_2$ -Anteil von 20 % im Zentrum und von 3 % am Rand. Legt man parallel zur Rotationsachse einen undirektionalen Druck an, um eine homogene Durchschnittsdichte zu erhalten, so muß die Bewegungsgleichung modifiziert werden.

Nachdem durch diese Rotation der zylindrischen Form die gewünschte radiale Verteilung eingestellt worden ist, wird die Form zur Verfestigung der Masse in einer Isostatpresse gepreßt. Je nach verwendetem flüssigen Zusatzstoff ist es wiederum möglich, die Verfestigung auch durch Austrocknung oder Abkühlung der zähflüssigen Masse zu erreichen, so daß auf das Pressen ganz verzichtet werden kann.

Das Prinzip des vorstehend beschriebenen Verfahrens kann zur Erzeugung von Gradientenprofilen in den geformten porösen Körpern zur Herstellung von Lichtwellenleiter-Vorformen mit einem Gradientenprofil im Kern verwendet werden.

A.Baumgärtner-10-8-4-2-4

Außerdem bietet dieses Verfahren die Möglichkeit, eine Vorform für einen Kern-Mantel-Lichtwellenleiter herzustellen, was im folgenden erläutert wird.

Bringt man in eine rotierende längliche zylindrische Form, die zur Vermeidung eines Schwerkrafteinflusses horizontal gelagert ist, zunächst das Mantelmaterial in Form einer flüssigen Masse, so läßt es sich durch die Rotation erreichen, daß dieses flüssige Mantelmaterial gleichmäßig die Innenwand der zylindrischen Form bedeckt und einen zylindrischen Hohlraum zur Einfüllung des Kernmaterials (ebenfalls in flüssiger Form) bestehen läßt. Um eine Vermischung des Mantelmaterials mit dem anschließend eingefüllten Kernmaterial zu vermeiden, kann man das die Innenwand bedeckende Mantelmaterial vor der Einfüllung des Kernmaterials antrocknen lassen. Danach wird das flüssige Kernmaterial in den verbliebenen Hohlraum eingefüllt, wobei man die Vorform rotieren läßt oder nicht, abhängig davon, ob ein Gradientenprofil oder eine gleichmäßige radiale Zusammensetzung des Kernmaterials gewünscht ist.

Die derart aus Kernmaterial und Mantelmaterial zusammengesetzte flüssige Masse läßt sich nun durch Trocknen und/oder Pressen in den porösen Körper überführen, aus dem anschließend durch eine Wärmebehandlung und/oder durch eine chemische Reaktion der Zusatzstoff entfernt wird, bevor der poröse Körper durch Sinterung in die glasige Vorform des Lichtwellenleiters überführt wird.

Sämtliche vorstehend erläuterten Verfahrensvarianten sind nicht nur wie beschrieben unter Verwendung eines flüssigen Zusatzstoffes, sondern auch unter Verwendung eines festen

A.Baumgärtner-10-8-4-2-4

Zusatzstoffes durchführbar, sofern nur der feste Zusatzstoff sich durch eine Wärmebehandlung und/oder eine chemische Reaktion wieder aus dem geformten porösen Körper
entfernen läßt.

Um zu untersuchen, welche Zusatzstoffe in Verbindung mit
dem erfindungsgemäßen Verfahren geeignet sind, wurden die
nachstehend beschriebenen Versuche durchgeführt:

Zu pulverförmigem Glas-Ausgangsmaterial wurde Wasser hinzugegeben, bis Klumpen entstanden. Darauf wurde die entstandene zähflüssige Masse in eine Preßform gefüllt und
mit niedrigem Druck (0,05 kbar) isostatisch gepreßt.
Möglicherweise kann auf das Pressen auch ganz verzichtet
werden, und die Verfestigung der zähflüssigen Masse geschieht durch Austrocknung. Nach dem Herausnehmen des verfestigten porösen Körpers wurde er einer Wärmebehandlung
bei 850$^o$ C unterzogen, um das Wasser auszutreiben. Dadurch wurde ein zusammenhängender Körper erzeugt, dessen
Dichte etwa 22 % der Dichte von Quarzglas betrug. Dies bedeutet eine beträchtliche Verbesserung, da eine Formgebung, die ohne Zusatzstoff durchgeführt würde, eine Dichte
ergeben würde, die bereits 31 % der Dichte vom Quarzglas
beträgt.

Dies ist deshalb vorteilhaft, weil eine hohe Dichte des geformten porösen Körpers dessen notwendige Nachbehandlung
in chlorhaltiger Atmosphäre zur Beseitigung der eingeschlossenen Hydroxyl-Ionen und der Verunreinigungen in Form von
Übergangsmetallen erschweren würde.

Es wurde auch ein Versuch mit einem leicht sublimierbaren

A.Baumgärtner-10-8-4-2-4


Feststoff durchgeführt:


Pulverförmiges Glas-Ausgangsmaterial wurde im Verhältnis von 7 : 3 mit pulverförmigen Ammoniumchlorid ($NH_4CL$, Sublimationstemperatur $320^o$ C) gemischt, in eine Preßform gefüllt und mit einem Druck von 0,5 kbar isostatisch gepreßt. Nach Herausnehmen des gepreßten Körpers aus der Preßform wurde er einer Wärmebehandlung bei über $400^o$ C unterzogen, um durch Sublimation den zugesetzten Feststoff zu entfernen. Es entstand ein poröser Körper mit einer Dichte von etwa 30 % der Dichte von Quarzglas. Ammoniumchlorid als Zusatzstoff ist in der Lage, die in Form von Übergangsmetallen vorhandenen Verunreinigungen zu beseitigen, da das freigesetzte Chlor mit diesen Übergangsmetallen leichtflüchtige Verbindungen eingeht. Es wurde tatsächlich ein Gewichtsverlust festgestellt, der auf eine Trocknung und Reinigung durch das Ammoniumchlorid hindeutet. Ein weiteres Beispiel für einen geeigneten leicht sublimierbaren Feststoff ist Kampfer ($C_{10}H_{16}O$, Sublimationstemperatur $270^o$ C).

Schließlich ist es auch möglich, das pulverförmige Glas-Ausgangsmaterial außer mit Wasser auch mit anderen anorganischen Flüssigkeiten oder mit organischen Lösungsmitteln oder Bindern zu versetzen, beispielsweise mit flüssigem Isopropylalkohol, der sich durch eine Wärmebehandlung aus dem geformten porösen Körper leicht verdampfen läßt. Es sind auch Stoffe geeignet, die sich durch chemische Reaktionen, also ohne eine eigens durchgeführte Wärmebehandlung, aus dem geformten Körper entfernen lassen, zum Beispiel durch Auswaschen oder Lösen durch geeignete Gase oder Flüssigkeiten. Bei der Entfernung des Zusatzstoffes durch eine Wärmebehandlung ist darauf zu achten, daß nicht

- 7 -                    0123191


A.Baumgärtner-10-8-4-2-4


bereits dadurch die Sinterung einsetzt, wogegen bei der
Entfernung des Zusatzstoffes durch eine chemische Reaktion darauf zu achten ist, daß der geformte poröse Körper nicht zerstört wird.

0123191

A.Baumgärtner-R.Dorn-H.Hanisch-A.Gutu-Nelle-J.Springer
10-8-4-2-4

Patentansprüche

1. Verfahren zur Herstellung von Glaskörpern, bei denen aus pulverförmigem Glas-Ausgangsmaterial ein poröser Körper geformt und dieser zum Glaskörper erschmolzen wird, wobei vor der Formung ein Zusatzstoff mit dem pulverförmigen Glas-Ausgangsmaterial vermischt und nach der Formung des porösen Körpers entfernt wird,

d a d u r c h   g e k e n n z e i c h n e t,

daß zur Formung des porösen Körpers die Mischung aus dem pulverförmigen Glas-Ausgangsmaterial und dem Zusatzstoff in eine längliche Form eingefüllt wird und die Form während oder nach dem Einfüllen um ihre Längsachse gedreht wird, derart, daß die Formung unter der Wirkung der Zentrifugalkraft stattfindet.

2. Verfahren nach Anspruch 1, dadurch gekennzeichnet, daß eine einzige Mischung in die Form eingefüllt und die Form während oder nach dem Einfüllen derart um ihre Längsachse gedreht wird, daß durch die Wirkung der Zentrifugalkraft die Bestandteile des Glas-Ausgangsmaterials nach einem Gradientenprofil in radialer Richtung verteilt werden.

ZT/P1-Kg/Ni
02.04.1984

0123191

A.Baumgärtner-10-8-4-2-4

3. Verfahren nach Anspruch 1, dadurch gekennzeichnet, daß eine erste Mischung aus einem ersten pulverförmigen Glas-Ausgangsmaterial und dem Zusatzstoff derart unter Rotation der Form um ihre Längsachse in die Form gebracht wird, daß sie auf der Innenwand eine gleichmäßige Schicht bildet und daß anschließend in den verbleibenden zylindrischen Hohl- raum eine zweite Mischung aus einem zweiten pulverförmigen Glas-Ausgangsmaterial und dem Zusatzstoff eingefüllt wird.

4. Verfahren nach Anspruch 3, dadurch gekennzeichnet, daß die Form während oder nach dem Auffüllen des zylindrischen Hohlraumes um ihre Längsachse gedreht wird, derart, daß durch Wirkung der Zentrifugalkraft die Bestandteile des Glas-Ausgangsmaterials nach einem Gradientenprofil in radialer Richtung verteilt werden.

5. Verfahren nach einem der Ansprüche 1 bis 4, dadurch gekennzeichnet, daß die Mischung nach dem Einfüllen in die Form durch Pressen verfestigt wird und daß der verfestigte Körper anschließend von der Form getrennt wird, bevor der Zusatzstoff entfernt wird.

6. Verfahren nach einem der Ansprüche 1 bis 4, dadurch gekennzeichnet, daß die Mischung nach dem Einfüllen in die Form ohne Pressen verfestigt wird und daß der verfestigte Körper anschließend von der Form getrennt wird, bevor der Zusatzstoff entfernt wird.

7. Verfahren nach einem der Ansprüche 1 bis 6 und nach Anspruch 2, dadurch gekennzeichnet, daß als Zusatzstoff eine leicht verdampfbare anorganische oder organische Flüssig- keit verwendet wird.

A.Baumgärtner-10-8-4-2-4

8. Verfahren nach einem der Ansprüche 1 bis 6, dadurch gekennzeichnet, daß als Zusatzstoff ein leicht sublimierbarer Feststoff verwendet wird, der durch eine Wärmebehandlung unterhalb der Sintertemperatur oder eine chemische Reaktion aus dem geformten Körper entfernt wird.

9. Verwendung des Verfahrens nach einem der vorstehenden Ansprüche zur Herstellung von Vorformen für Lichtwellenleiter